(19) **Europäisches Patentamt European Patent Office Office européen des brevets**

(11) **EP 2 022 164 B1**

(12) **FASCICULE DE BREVET EUROPEEN**

(45) Date de publication et mention
de la délivrance du brevet:
**13.06.2018 Bulletin 2018/24**

(51) Int Cl.:
***H02P 6/15*** *(2016.01)*

(21) Numéro de dépôt: **07731966.3**

(86) Numéro de dépôt international:
**PCT/FR2007/051195**

(22) Date de dépôt: **27.04.2007**

(87) Numéro de publication internationale:
**WO 2007/138203 (06.12.2007 Gazette 2007/49)**

(54) **PROCÉDÉ ET DISPOSITIF DE GÉNÉRATION DE SIGNAUX DE COMMANDE D'UNE MACHINE ÉLECTRIQUE TOURNANTE POLYPHASÉE EN FONCTION DE LA VITESSE**

VERFAHREN UND EINRICHTUNG ZUM ERZEUGEN VON SIGNALEN ZUR STEUERUNG EINES ROTIERENDEN ELEKTRISCHEN MEHRPHASENMOTORS ABHÄNGIG VON DER DREHZAHL

METHOD AND DEVICE FOR GENERATING SIGNALS FOR CONTROLLING A MULTI-PHASED ROTATING ELECTRIC MOTOR ACCORDING TO SPEED

(84) Etats contractants désignés:
**AT BE BG CH CY CZ DE DK EE ES FI FR GB GR HU IE IS IT LI LT LU LV MC MT NL PL PT RO SE SI SK TR**

(73) Titulaire: **VALEO EQUIPEMENTS ELECTRIQUES MOTEUR**
**94046 Créteil Cedex (FR)**

(30) Priorité: **31.05.2006 FR 0651975**

(72) Inventeur: **ROUIS, Oussama**
**92300 Levallois Perret (FR)**

(43) Date de publication de la demande:
**11.02.2009 Bulletin 2009/07**

(56) Documents cités:
**FR-A1- 2 854 746          GB-A- 2 137 755**
**US-A1- 2002 175 645**

EP 2 022 164 B1

Printed by Jouve, 75001 PARIS (FR)

**Description**

**DOMAINE TECHNIQUE DE L'INVENTION**

La présente invention concerne un procédé et un dispositif de génération de signaux de commande d'une machine électrique tournante polyphasée en fonction de la vitesse.

Ces signaux de commande pilotent l'alimentation de la machine de manière à procurer à la machine des caractéristiques de puissance et de couple adaptées aux diverses applications.

**ARRIERE PLAN TECHNOLOGIQUE DE L'INVENTION**

Avec la généralisation des moteurs sans balais, de nombreux procédés et dispositifs remplissant cette fonction sont connus de l'état de la technique.

Plus récemment, ces dispositifs et procédés concernent aussi les générateurs d'électricité réversibles, c'est-à-dire ceux fonctionnant aussi bien en alternateur qu'en démarreur.

Un procédé de commande d'un alternateur-démarreur est par exemple décrit dans la demande de brevet d'invention FR2854746 par la société VALEO EQUIPEMENTS ELECTRIQUES MOTEUR.

Selon ce procédé breveté, les signaux de synchronisation issus des capteurs déterminant la position angulaire du rotor de la machine sont déphasés pour commander de façon séquentielle les phases de l'induit.

L'angle de déphasage des signaux est choisi de manière à contrôler le couple en fonction de la vitesse et à adapter celui-ci au mode de fonctionnement, notamment soit en démarreur, soit en moteur auxiliaire.

Pour ce faire un microcontrôleur, interfacé avec un convertisseur numérique-analogique et des amplificateurs opérationnels, effectue, pour générer chaque signal déphasé, une combinaison linéaire des signaux de synchronisation dont la somme des coefficients est nulle.

L'optimisation de l'alternateur-démarreur, décrit notamment dans le document FR2854746, a conduit la société VALEO à implémenter sur des composants programmables, en remplacement du système fonctionnant en mode mixte, un procédé général entièrement numérique faisant l'objet de la demande de brevet conjointe intitulée « Procédé et dispositif de génération de signaux déphasés et leur utilisation ».

Le procédé décrit dans cette demande conjointe est général dans la mesure où l'angle de déphasage des signaux est une variable exogène au système, et non une variable intervenant dans la boucle de pilotage de la machine.

Ce procédé ne sera pas décrit en détail dans la présente demande, la description de la demande conjointe étant introduite ici dans son intégralité pour toutes références utiles.

**DESCRIPTION GENERALE DE L'INVENTION**

Le but de la présente invention est donc de tirer parti de la réduction des temps de transit et de la gigue obtenue par le procédé général déposé conjointement, dans le cas d'espèce de l'amélioration des performances d'une machine de type alternateur-démarreur.

Pour ce faire, la présente invention vise un procédé de génération de signaux de commande d'une machine électrique tournante polyphasée comportant des enroulements de phases et des capteurs de la position du rotor en nombre égal au nombre des phases.

Ce procédé est du type de ceux où les signaux de commande pilotant l'alimentation de puissance des enroulements sont constitués par des signaux déphasés au moyen d'une unité de traitement d'un angle de déphasage continûment variable par rapport à des signaux de synchronisation produits par les capteurs, cette unité de traitement comportant des entrées recevant les signaux de synchronisation et des sorties émettant les signaux déphasés.

Le procédé selon l'invention est remarquable en ce que les signaux de synchronisation sont des signaux binaires présentant des fronts de synchronisation et en ce que les fronts montants et descendants de ces signaux déphasés sont générés après un délai de commutation de niveau fonction au moins de cet angle de déphasage à partir d'au moins un front de référence choisi parmi les fronts de synchronisation tel que le délai est minimum.

Selon une caractéristique additionnelle du procédé, les signaux de commande sont fort avantageusement identiques aux signaux de synchronisation dans des conditions de fonctionnement spécifiques, notamment quand la vitesse de rotation de la machine est inférieure à une première vitesse minimum, ou supérieure à une première vitesse maximum.

De préférence, les conditions de fonctionnement spécifiques de la machine comprennent de plus le cas où la vitesse de rotation:

- croît et reste inférieure à une seconde vitesse minimum supérieure à la première vitesse minimum ;
- décroît et reste supérieure à une seconde vitesse maximum inférieure à la première vitesse maximum, la seconde vitesse maximum étant supérieure à la seconde vitesse minimum.

Avantageusement, on considèrera aussi que les conditions de fonctionnement spécifiques comprennent le cas où l'unité de traitement est arrêtée.

Dans ces conditions de fonctionnement spécifiques l'unité de traitement recopie les niveaux logiques des entrées sur les sorties, ou alternativement, de préférence, l'unité de traitement commande la commutation des signaux de commande sur les entrées.

Selon le procédé de l'invention, les signaux de synchronisation ayant un rapport cyclique égal à 0,5 et étant déphasés entre eux d'un angle de déphasage nominal en degrés égal à 360° divisé par le nombre de phases, on mesure un intervalle de temps compris entre deux fronts de synchronisation successifs, l'un étant montant et l'autre descendant.

De préférence, une valeur interfront de cet intervalle de temps résulte d'un comptage au moyen d'un circuit retardateur programmable de mesure associé aux signaux de synchronisation ayant une fréquence d'incrémentation de mesure prédéterminée.

La détermination des conditions de fonctionnement spécifiques de la machine comprend alors avantageusement la comparaison de cette valeur interfront à un groupe de valeurs interfront nominales.

En dehors des conditions de fonctionnement spécifiques déterminées précédemment, l'angle de déphasage est, selon l'invention, une fonction de la vitesse de rotation de la machine.

Selon des caractéristiques additionnelles du procédé, chaque valeur du délai de commutation de niveau, en unité de temps égale à l'inverse de la fréquence d'incrémentation de mesure, est de préférence tabulée pour chaque valeur interfront dans une première table, de même qu'une valeur de décalage égale au complément à 180° de l'angle de déphasage est préférentiellement tabulée pour chaque valeur interfront dans une seconde table.

A ce stade, le procédé de base selon l'invention comprend avantageusement les étapes suivantes :

- on rend la fréquence d'incrémentation courante d'un circuit retardateur programmable courant associé à un signal de synchronisation courant égale à la fréquence d'incrémentation de mesure;
- on associe une ligne de sortie courante au circuit retardateur programmable courant;
- on identifie le front de référence à partir de la valeur de décalage lue dans la seconde table;
- on charge la valeur courante du délai lue dans la première table dans le circuit retardateur programmable courant;
- on configure le circuit retardateur programmable courant de manière que la ligne de sortie courante effectue une première transition d'un niveau haut vers un niveau bas, ou bien une seconde transition d'un niveau bas vers un niveau haut, quand un compteur courant du retardateur programmable courant atteint la valeur courante;
- on génère le signal déphasé courant au moyen de la ligne de sortie courante.

Alternativement aux étapes précédentes, en variante :

- on rend la fréquence d'incrémentation courante d'un circuit retardateur programmable courant associé au signal de synchronisation courant égale à la fréquence d'incrémentation de mesure;
- on identifie le front de référence à partir de la valeur de décalage lue dans la seconde table;
- on charge la valeur courante du délai lue dans la première table dans le circuit retardateur programmable courant;
- on active une interruption courante associée au circuit retardateur programmable courant se produisant à chaque fois que la valeur courante est atteinte ;
- on rend la fréquence de comptage courante d'un compteur programmable courant d'un module de modulation de largeur d'impulsions programmable courant égale à la fréquence d'incrémentation de mesure divisée par le double du nombre de phases ;
- on associe une ligne de sortie courante au module de modulation de largeur d'impulsions programmable courant;
- on charge un registre de période courant et un registre de rapport cyclique courant du module de modulation de largeur d'impulsions programmable courant respectivement avec la valeur interfront et avec la moitié de cette valeur interfront;
- on configure le module de modulation de largeur d'impulsions courant de façon que la ligne de sortie courante subisse une transition initiale d'un niveau haut à un niveau bas, puis une première transition d'un niveau bas à un niveau haut quand le compteur programmable courant atteint une valeur intermédiaire courante contenue dans registre de rapport cyclique courant, et enfin une seconde transition d'un niveau haut à un niveau bas quand le compteur programmable courant atteint une valeur finale courante contenue dans le registre de période courant à chaque déclenchement de l'interruption courante ;
- on génère le signal binaire déphasé courant au moyen de la ligne de sortie courante.

L'invention concerne aussi un dispositif suivant la revendication 15 de génération de signaux de commande d'une machine électrique tournante polyphasée comportant des enroulements de phases et des capteurs de la position du rotor en nombre égal au nombre des phases.

Le dispositif selon l'invention est du type de ceux comprenant des lignes de commande destinées à piloter l'alimentation de puissance de ces enroulements, et une unité de traitement présentant des entrées recevant des signaux de synchronisation produits par les capteurs, et des sorties émettant des signaux déphasés par rapport aux signaux de synchronisation.

Ce dispositif est remarquable en ce qu'il comprend de plus des circuits de commutation commandés par un signal d'aiguillage émis par l'unité de traitement et reliant les lignes de commande soit aux entrées, soit aux sorties, en fonction de la vitesse de rotation de la machine et/ou de l'état de l'unité de traitement.

Plus précisément, ces circuits de commutation sont avantageusement des portes analogiques.

Dans un mode de réalisation préféré de l'invention, l'unité de traitement est de préférence constituée d'un microprocesseur ou d'un microcontrôleur comprenant :

- au moins une unité centrale;
- au moins une mémoire volatile et/ou au moins une mémoire non-volatile;
- au moins un compteur programmable mesurant la vitesse de rotation de la machine;
- des circuits retardateurs programmables en nombre au moins égal au nombre de phases ;
- au moins un port d'entrée recevant des signaux de synchronisation produits par les capteurs;
- au moins un premier port de sortie émettant des signaux déphasés par rapport aux signaux de synchronisation ;
- au moins un second port de sortie émettant le signal d'aiguillage.

Alternativement, en variante, l'unité de traitement est constituée préférentiellement d'un microprocesseur ou d'un microcontrôleur comprenant :

- au moins une unité centrale;
- au moins une mémoire volatile et/ou au moins une mémoire non-volatile;
- au moins un compteur programmable mesurant la vitesse de rotation de la machine;
- des circuits retardateurs programmables en nombre au moins égal au nombre de phases ;
- des modules de modulation de largeur d'impulsions programmables en nombre au moins égal au nombre de phases ;
- au moins un port d'entrée recevant des signaux de synchronisation produits par les capteurs;
- au moins un premier port de sortie émettant des signaux déphasés par rapport aux signaux de synchronisation ;
- au moins un second port de sortie émettant le signal d'aiguillage.

Dans l'un et l'autre mode de réalisation, la mémoire non-volatile contient avantageusement une première table associant des décalages temporels des signaux déphasés chargés dans les circuits retardateurs programmables à des valeurs représentatives de la vitesse de rotation produites par le compteur programmable.

Cette mémoire non-volatile contient aussi avantageusement une seconde table associant le complément à 180° des déphasages des signaux déphasés aux valeurs représentatives de la vitesse de rotation produites par le compteur programmable.

On tire évidemment bénéfice du fait que les mémoires de l'unité de traitement contiennent de préférence un programme mettant en oeuvre le procédé selon l'invention qui a été exposé dans ses grandes lignes précédemment.

Comme il va de soi, l'invention concerne également les séquences d'instructions exécutables par le dispositif décrit brièvement ci-dessus mettant en oeuvre le procédé selon l'invention.

Ces quelques spécifications essentielles auront rendu évidents pour l'homme de métier les avantages apportés par le procédé et le dispositif de génération de signaux de commande d'une machine électrique tournante polyphasée selon l'invention par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

## BREVE DESCRIPTION DES DESSINS

La Figure 1 montre la phase d'apparition des signaux de synchronisation issus des capteurs.

La Figure 2 montre l'intervalle d'activation des signaux déphasés.

La Figure 3 montre le principe de l'aiguillage des signaux de synchronisation ou des signaux déphasés vers les signaux de commande.

La Figure 4 illustre le principe de la mesure de la vitesse de la machine au moyen d'un circuit retardateur programmable de mesure.

La Figure 5 représente les variations de l'angle de déphasage par rapport au signaux de synchronisation, et les variations du décalage de phase par rapport à un front de référence en fonction du complément à 180° de l'angle de déphasage.

La Figure 6 illustre schématiquement l'utilisation de tabulations en entrée de la fonction de décalage.

La Figure 7 représente un exemple de loi de variation de l'angle de déphasage en fonction de la vitesse de rotation.

La Figure 8 représente graphiquement un exemple de tabulation de la valeur du délai de commutation de niveau en fonction de la valeur interfront.

La Figure 9 représente graphiquement les variations de l'angle de déphasage en fonction de la valeur du délai de commutation de niveau.

La Figure 10 est le schéma de principe d'un mode de réalisation préféré du dispositif selon l'invention faisant appel uniquement à des compteurs et à des circuits retardateurs programmables.

La Figure 11 est le schéma de principe d'une variante de réalisation préférée du dispositif selon l'invention mettant en oeuvre des modules de modulation en largeur d'impulsions programmables.

## DESCRIPTION DES MODES DE REALISATION PREFERES DE L'INVENTION

Dans le procédé de génération de signaux déphasés faisant l'objet de la demande conjointe susmentionnée, le déphasage est créé par des retards temporels introduits par des circuits retardateurs, correctement programmés, à partir de références mutuelles entre les signaux de synchronisation en entrée.

Ce principe implique systématiquement un retard de l'apparition des signaux reconstruits par rapport au signaux en entrée durant une phase transitoire correspondant à l'établissement de la première période de chacun de ces derniers.

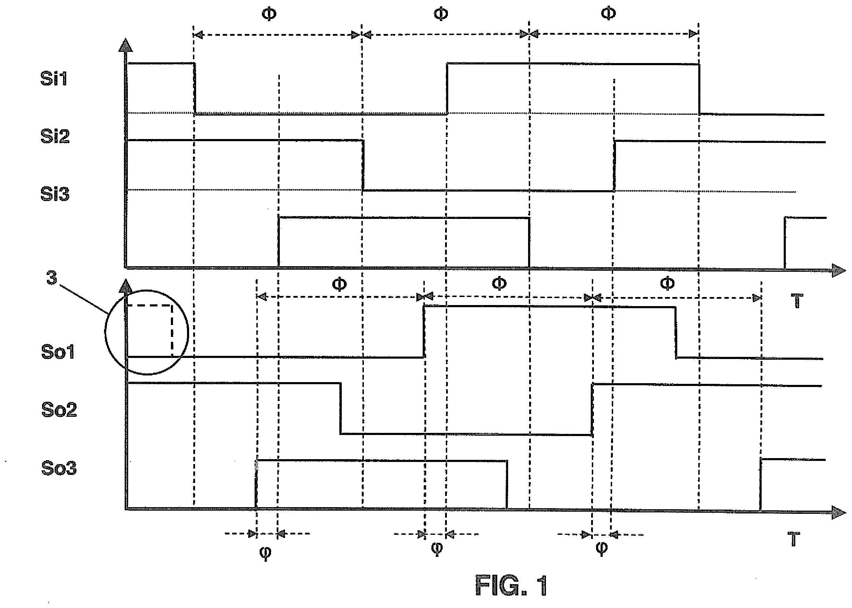

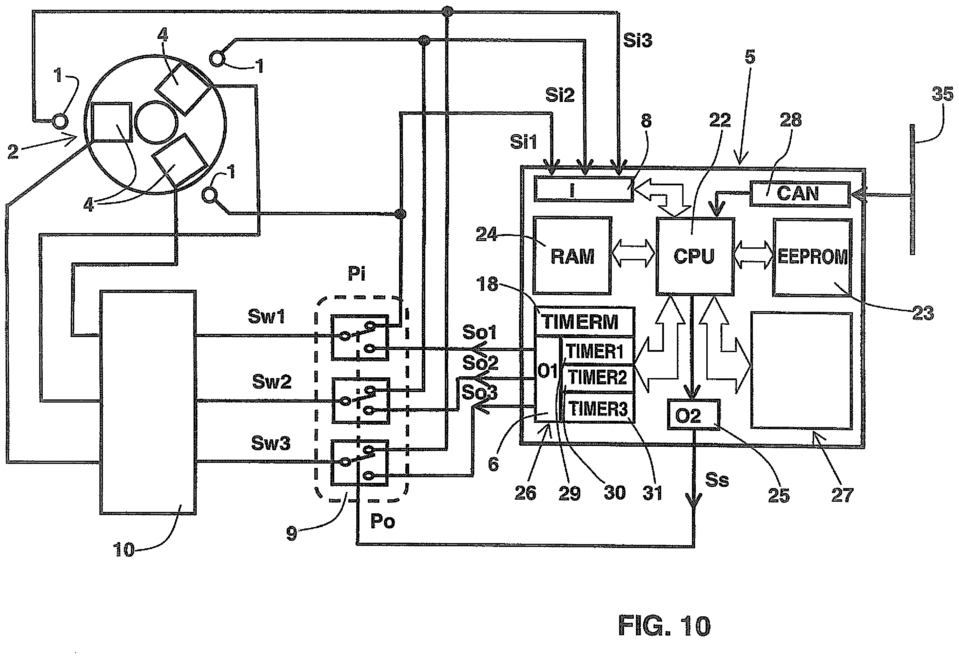

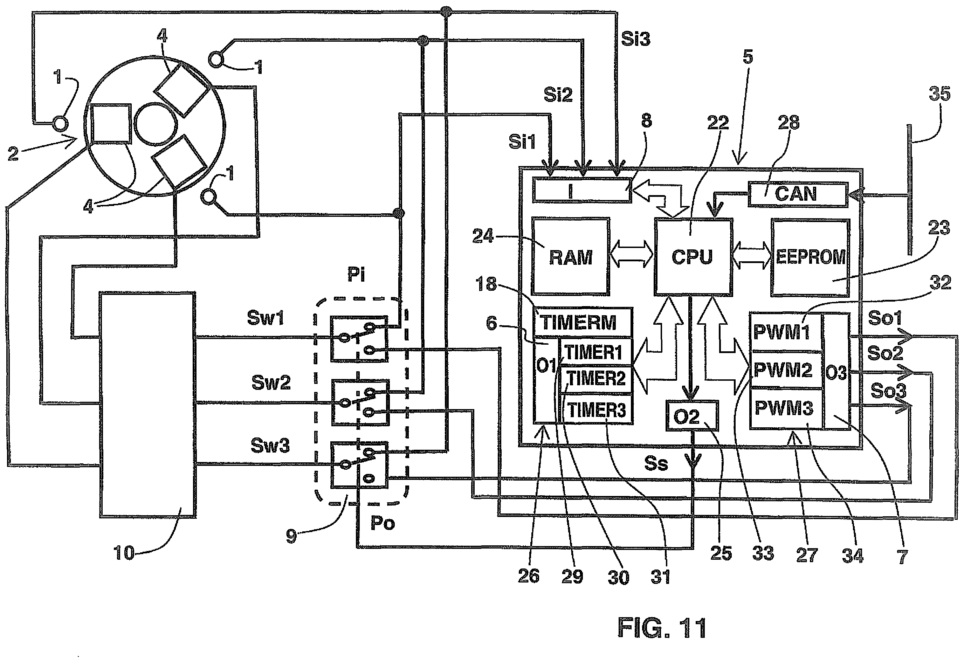

La Figure 1 montre les signaux de synchronisation Si1,Si2,Si3 issus des capteurs 1 d'une machine triphasée 2 représentée schématiquement sur les Figures 10 et 11.

Ces signaux Si1,Si2,Si3 sont des signaux binaires de rapport cyclique 0,5 et qui présentent entre eux un même déphasage nominal $\Phi$, ici égal à 120°, la machine ayant trois phases.

Le procédé général de génération de signaux déphasés utilisé dans cette application reconstruit des signaux Sol,So2,So3 ayant entre eux en régime permanent le même déphasage nominal $\Phi$, mais qui présentent un angle de déphasage $\varphi$ par rapport aux signaux entrants Si1,Si2,Si3.

Pendant la phase transitoire, des parties des signaux de synchronisation Si1,Si2,Si3 peuvent ne pas être reconstruites, telles que la portion 3 du signal de sortie So1 correspondant au signal d'entrée Si1 représentée sur la Figure 1.

Or, le pilotage d'une machine électrique 2 nécessite la reconstruction immédiate des signaux de commande Sw1,Sw2,Sw3 des phases 4 dés l'apparition des signaux d'entrée Si1,Si2,Si3 fournis par les capteurs de position 1.

La solution adoptée pour résoudre ce problème consiste à rendre les signaux de commande Sw1,Sw2,Sw3 de la machine identiques aux signaux de synchronisation Si1,Si2,Si3 pendant la phase transitoire de l'établissement des signaux déphasés Sol,So2,So3.

Pour ce faire, selon une première méthode, le microcontrôleur 5 mettant en oeuvre le procédé de déphasage reconfigure les lignes de son port de sortie 6,7 en sorties classiques (sorties numériques de niveaux haut ou bas) et recopie les niveaux logiques Si1,Si2,Si3 présents sur les lignes de son port d'entrée 8 connecté aux capteurs dès leur apparition, et jusqu'à une première vitesse minimum de rotation Vmin1 de la machine 2.

Au-delà de cette vitesse Vmin1, les algorithmes de reconstruction des fronts des signaux déphasés Sol,So2,So3 à partir des fronts des signaux de synchronisation Si1,Si2,Si3 sont activés.

Pour limiter la gigue due à la mesure de la période des signaux en entrée Si1,Si2,Si3, la recopie des signaux est aussi réactivée dès que la vitesse de rotation dépasse une première vitesse maximum Vmax1.

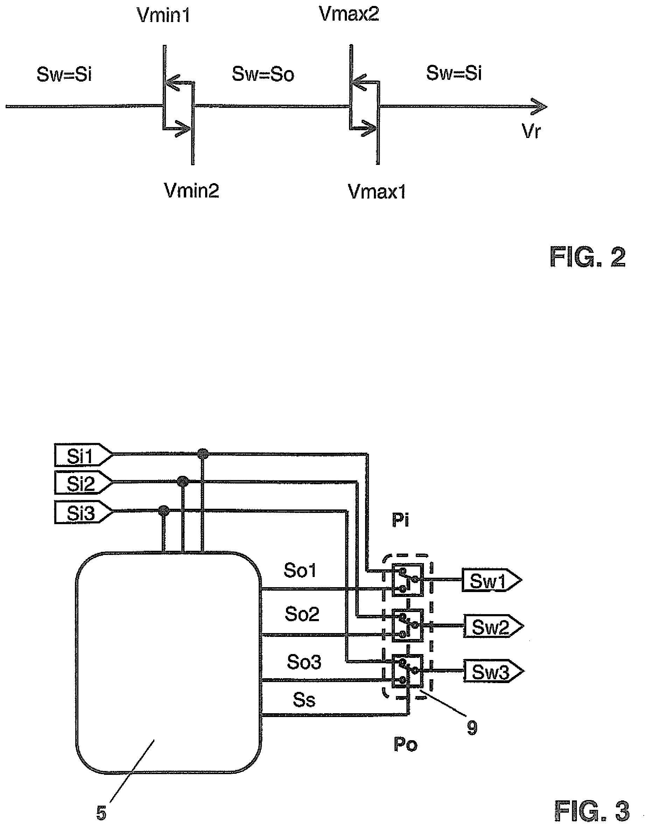

Comme le montre la Figure 2, deux cycles d'hystérésis sont utilisés aux frontières des domaines de fonctionnement spécifiques que sont le démarrage et le fonctionnement à grande vitesse pour éviter les oscillations autour des premières vitesses minimum et maximum Vmin1,Vmin2.

Quand la vitesse de rotation croît à partir de zéro, la recopie des signaux est maintenue jusqu'à une seconde vitesse minimum Vmin2, légèrement supérieure à la première vitesse minimum Vmin1 ; de même quand la vitesse de rotation décroît à partir d'une grande valeur, la recopie continue jusqu'à une seconde vitesse maximum Vmax2, légèrement inférieure à la première vitesse maximum Vmax1.

Selon une seconde méthode, les signaux de commande Sw1,Sw2,Sw3 sont rendus identiques aux signaux Si1,Si2,Si3 issus des capteurs 1 au moyen d'un nombre équivalent de circuits de commutation 9 permettant l'aiguillage synchronisé des signaux.

La Figure 3 illustre cette seconde méthode. L'utilisation des commutateurs externes 9 permet l'aiguillage soit des signaux de synchronisation Si1, Si2 et Si3, soit des signaux déphasés So1, So2 et So3 vers l'alimentation de puissance 10 en fonction des conditions de fonctionnement spécifiques de la machine 2.

**EP 2 022 164 B1**

Le basculement des circuits de commutation 9 d'une position Pi,Po à une autre est piloté par un signal d'aiguillage Ss émis par le calculateur en fonction du résultat d'une comparaison entre une mesure de la vitesse de rotation et des valeurs de consigne.

Un avantage de cette seconde méthode par rapport à la première est la sécurité de fonctionnement apportée par les circuits de commutation 9 en cas de passage du système dans un mode de fonctionnement dégradé, par exemple quand le microcontrôleur 5 est arrêté.

En effet, si l'on considère la position Pi, où les signaux de commandes Sw1,Sw2,Sw3 sont identiques aux signaux de synchronisation Si1,Si2,Si3, comme une position initiale, ou par défaut, on peut imaginer une stratégie de protection pour forcer cette position en cas de dégradation du fonctionnement du microcontrôleur 5.

Des portes analogiques 9, telles que celles d'un circuit mutiplexeur, garantissent que, dans cette position Pi initiale ou par défaut, les signaux de synchronisation Si1,Si2,Si3 issus des capteurs de position 1 commandent sans modification l'alimentation de puissance 10 de la machine 2.

Les deux méthodes exposées ci-dessus sont applicables aux deux solutions de décalage par logiciel proposées dans la demande conjointe « Procédé et dispositif de génération de signaux déphasés et leur utilisation » à laquelle on pourra se référer.

Dans les solutions de régénération logicielle des signaux décalés, la consigne de l'angle $\varphi$ est injectée dans l'algorithme par les modules de pilotage de l'application.

Mais le pilotage de la consigne de décalage par un module applicatif externe à la fonction décalage implique l'utilisation de calcul intermédiaire pour évaluer les valeurs correspondant au retard à introduire, et se traduit systématiquement par une surcharge de l'unité centrale CPU du microcontrôleur 5 utilisé.

L'utilisation de ces solutions dans la boucle de contrôle d'une machine tournante électrique polyphasée 2 implique donc l'intégration de la loi de variation de l'angle de déphasage $\varphi$ en fonction de la vitesse dans le module de décalage et l'optimisation des calculs des déphasages à introduire.

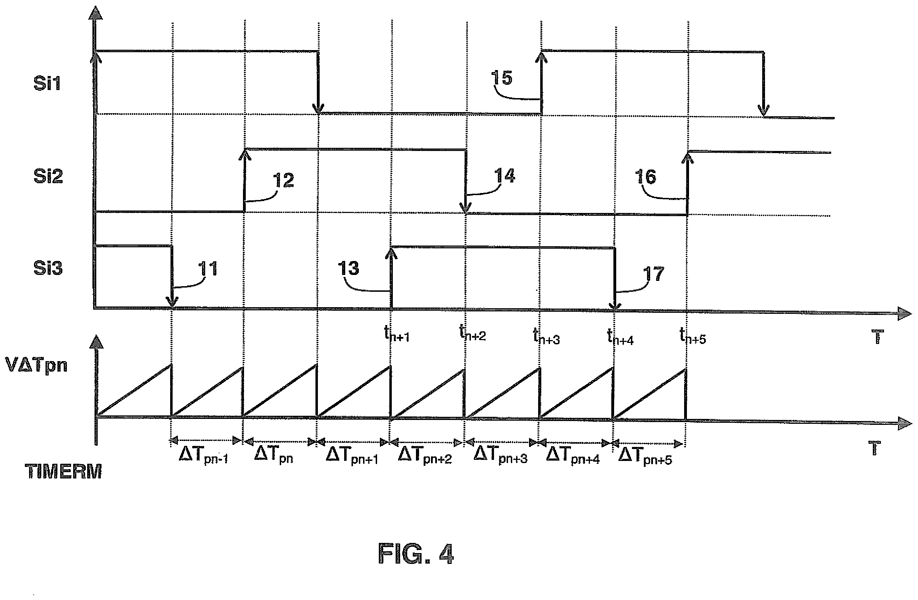

La façon d'intégrer cette loi de variation sera mieux comprise en se référant aux Figures 4 à 9.

En tenant compte du fait que pour une machine 2 à N phases, les capteurs 1 de la position du rotor sont au nombre de N et qu'ils génèrent des signaux de synchronisation Si1,Si2,Si3 ayant un rapport cyclique de 0,5 et déphasés entre eux d'un angle de phase nominal $\Phi=360/N$, il suffit de mesurer un intervalle de temps $\Delta$Tpn entre deux fronts successifs, descendant puis ascendant 11,12;14,15;17,16, ou ascendant puis descendant 13,14, comme le montre la Figure 4, pour mesurer la période de rotation, c'est-à-dire l'inverse de la vitesse de rotation Vr.

Pour ce faire, on utilise un circuit retardateur programmable de mesure TIMERM,18 dont la fréquence d'incrémentation de mesure FTIMERM est prédéterminée. La valeur en unité de temps du timer de l'intervalle de temps $\Delta$Tpn, c'est-à-dire le résultat V$\Delta$Tpn du comptage par le TIMERM est alors :

$$\text{V}\Delta\text{Tpn}=\Delta\text{Tpn * FTIMERM}$$

La période $\Delta$Ttotal des signaux de synchronisation Si1,Si2,Si3 est donc à l'instant tn :

$$\Delta\text{Ttotal = Np * } \Delta\text{Tpn}$$

ou dans l'unité de temps du timer TIMERM :

$$\text{V}\Delta\text{Ttotal = Np * V}\Delta\text{Tpn}$$

Np étant le nombre de fronts par période électrique des signaux Si1,Si2,Si3, c'est-à-dire Np=2*N.

Il en résulte que la valeur interfront V$\Delta$Tpn est liée à la vitesse de rotation Vr (en tour par minute) par la relation suivante :

$$\text{V}\Delta\text{Tpn = 60 * FTIMERM/(Np * Vr)}$$

Intégrer la loi de variation de l'angle de déphasage $\varphi$ en fonction de la vitesse Vr dans l'application, revient donc à intégrer une loi Lv associant à chaque valeur interfront V$\Delta$Tpn un déphasage $\varphi$.

La demande de brevet conjointe « Procédé et dispositif de génération de signaux déphasés et leur utilisation » expose en détail la manière de reconstruire les fronts des signaux So1,So2,So3 déphasés à partir de fronts de référence des signaux de synchronisation Si1,Si2,Si3.

La valeur V$\Delta$T1 du délai de commutation de niveau $\Delta$T1 à introduire par rapport à un front de référence est donnée par l'expression suivante :

$$V\Delta T1 = V\Delta Tpn * ((\varphi'' * Np) / 360)$$

où :

- $\phi'' = \varphi' + \Delta\varphi ref$
- $\varphi' = 180 - \varphi$
- $\varphi$ est l'angle de phase de contrôle exprimé en degré ;
- $\Delta\varphi ref$ est le déphasage $\varphi 0 - \varphi r$, exprimé en degrés, entre un front initial d'angle de phase initial $\varphi 0$ du signal de synchronisation courant et le front de référence d'angle de phase de référence $\varphi r$ d'un signal de synchronisation de référence choisi parmi les signaux de synchronisation Si1,Si2,Si3.

Pour une machine à trois phases, les valeurs de $\Delta\varphi ref$ sont données dans les tableaux Ia et Ib suivant :

Tableau Ia

| $\varphi'$ | $0° \leq \varphi' < 30°$ | $30° \leq \varphi' < 90°$ | $90° \leq \varphi' < 150°$ |
|---|---|---|---|
| $\Delta\varphi ref$ | +60 | 0 | -60 |

Tableau Ib

| $\varphi'$ | $150° \leq \varphi' < 210°$ | $210° \leq \varphi' < 270°$ | $270° \leq \varphi' < 330°$ | $330° \leq \varphi' < 360°$ |
|---|---|---|---|---|
| $\Delta\varphi ref$ | -120 | -180 | -240 | -300 |

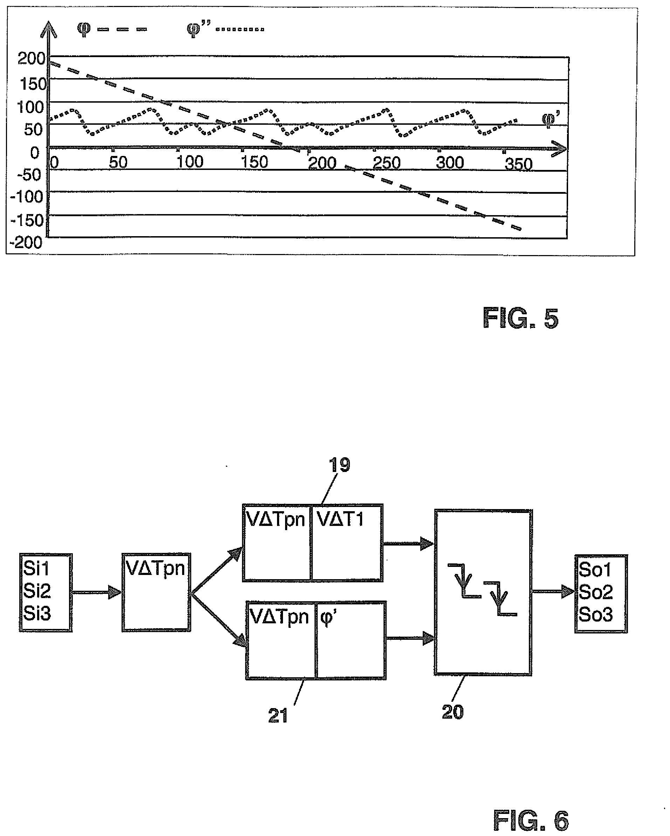

La Figure 5 montre les variations de $\varphi$ et de $\varphi''$ en fonction $\varphi'$. Quand $\varphi'$ varie de 0 à 360°, l'angle de déphasage $\varphi$ varie de -180° à +180°, couvrant ainsi la totalité de la plage des déphasages possibles, mais les valeurs de $\varphi''$ intervenant dans l'expression donnant la valeur V$\Delta$T1 restent comprises entre 30° et 90°, minimisant ainsi le délai de commutation de niveau $\Delta$T1.

Selon le procédé de l'invention, la loi de variation de l'angle de déphasage $\varphi$ en fonction de la vitesse de rotation Vr est représentée par une première table 19 à deux colonnes, ou vecteurs. La première colonne contient les valeurs de V$\Delta$Tpn, et la deuxième colonne les valeurs correspondantes de V$\Delta$T1.

Les valeurs des deux vecteurs sont choisies de façon à avoir le meilleur compromis entre un pilotage fin et précis (un nombre élevé de points) et un temps de calcul acceptable pour éviter une surcharge de l'unité centrale CPU du microcontrôleur utilisé 5 (un nombre moins élevé de points). Une interpolation linéaire est avantageusement utilisée pour affiner les calculs.

Comme le schématise la Figure 6, la fonction de décalage 20 à besoin, en plus de la valeur V$\Delta$T1 du délai de commutation de niveau $\Delta$T1, de la valeur de décalage $\varphi'$ pour identifier le front de référence à partir duquel la valeur V$\Delta$T1 sera chargée dans le circuit retardateur programmable courant TIMER1,TIMER2,TIMER3 qui crée de retard.

Cette information est déterminée grâce à une seconde tabulation 21 parallèle à la première 19. Dans ce cas, l'information d'indexage sera toujours la valeur V$\Delta$Tpn mesurée et la valeur recherchée sera l'angle $\varphi'$ correspondant.

Dans la pratique, l'intégration de la loi de pilotage sur un intervalle limité permet de s'affranchir de la deuxième tabulation 21, car dans ce cas $\Delta\varphi ref$ garde une valeur constante qu'on peut simplement renseigner d'une façon statique, comme le montre l'exemple de mise en oeuvre ci-dessous.

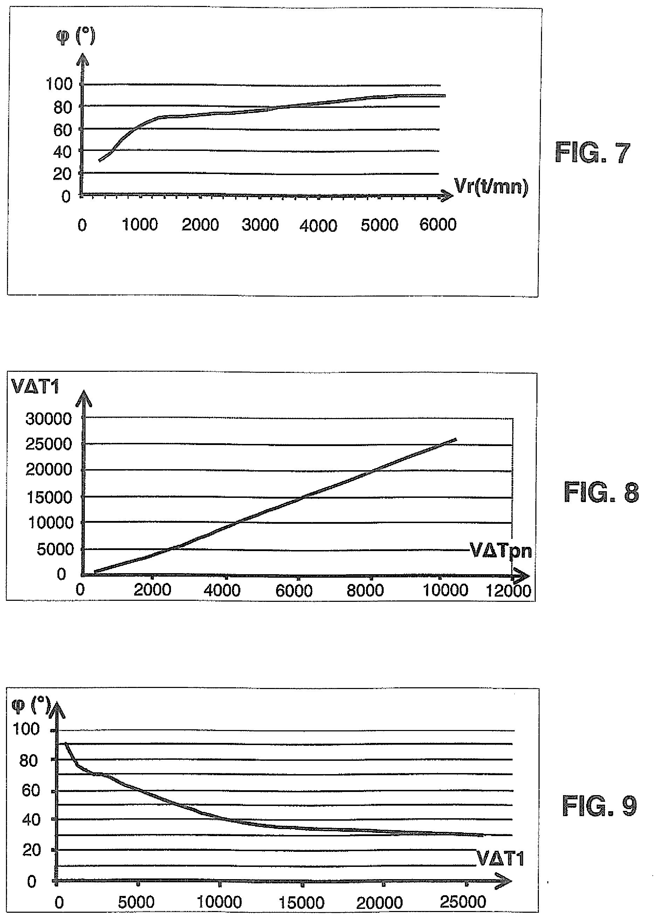

La loi de variation $\varphi = F (Vr)$ de l'angle de déphasage $\varphi$ en fonction de la vitesse d'une machine tournante électrique 2 à trois phases est représentée sur la Figure 7.

A partir d'une vitesse de 200 tr/mn est appliquée une avance $\varphi$ de 30° pour tendre vers 90° de décalage autour des 6000 tours/mn.

Dans cet intervalle de valeurs de déphasage :

- $\Delta\varphi ref$ garde une valeur constante nulle (le front de référence est pris sur le front ascendant) ;
- $\varphi'' = \varphi'$
- $V\Delta T1 = V\Delta Tpn * \phi'/60)$

La conversion de la vitesse en valeurs interfront V∆Tpn par le circuit retardateur programmable de mesure TIMERM,18 de la période interfront ∆Tpn mesurée sur les capteurs de position de la machine 2, conduit à la loi de variation du délai de commutation de niveau V∆T1 représentée sur la Figure 8.

La Figure 9 montre les variations du déphasage réel φ qui en résultent.

La méthode d'intégration de la loi de variation de l'angle de déphasage φ en fonction de la vitesse de rotation Vr est applicable au procédé de base de génération de signaux déphasés, aussi bien qu'à sa variante, exposés dans la demande de brevet conjointe, c'est-à-dire que la régénération des signaux et le décalage soient effectués par des compteurs programmables TIMERM,TIMER1,TIMER2,TIMER3, ou que la régénération des signaux soit réalisée par des modules de modulation de largeur d'impulsion programmables PWM1,PWM2,PWM3 et le décalage par des compteurs programmables TIMERM,TIMER1,TIMER2,TIMER3.

Les Figures 10 et 11 montrent l'architecture générale du dispositif 5,9 adapté à la mise en oeuvre du procédé de génération des signaux de commande Swl,Sw2,Sw3 selon l'invention.

Le microcontrôleur 5 utilisé est de préférence un microcontrôleur 16 bits de type MC9S12DG128 fabriqué par la société MOTOROLA, qui comprend.

- une unité centrale de traitement 22, dont la fréquence de l'horloge interne Fbus du bus interne est de préférence de 20Mhz ;
- une mémoire non volatile 23 de type « flash », de préférence de 128Koctets ;
- une mémoire RAM 24, ayant de préférence une capacité de 8Koctets (RAM est l'acronyme anglais de « Random Access Memory », c'est-à-dire « Mémoire à Accès Aléatoire ») ;
- des ports I/O 6,7,8,25 (I/O désigne des Entrées/Sorties, Input/Output en anglais);
- un périphérique ECT 26 (ECT est l'acronyme anglais de « Enhanced Capture Timer », c'est-à-dire « Compteur d'Acquisition Amélioré ») ;
- un périphérique PWM 27 (PWM est l'acronyme anglais de « Pulse Width Modulation », c'est-à-dire « Modulation en Largeur d'Impulsions »);
- une interface CAN 28 (CAN est l'acronyme anglais de « Controller Area Network », c'est-à-dire « Réseau Local de Contrôleurs ») ;
- une interface JTAG (JTAG est l'acronyme anglais de « Join Test Action Group », c'est-à-dire « Groupe d'Action pour les Tests Commun ») pour la programmation et le débogage selon le standard IEEE1149.1.

Par une ligne de sortie 25 dédiée, le microcontrôleur 5 commande Ss des portes analogiques 9 constituées de préférence par un multiplexeur-démultiplexeur de type 74HC4053.

Le module ECT 26 comprend un compteur programmable 18 destiné à mesurer la vitesse de rotation Vr et des circuits retardateurs programmables 29,30,31 destinés à générer les signaux déphasés Sol,So2,So3 dans un premier mode de réalisation préféré représenté sur la Figure 10.

Alternativement, comme le montre la Figure 11, les signaux déphasés Sol,So2,So3 sont reconstruits par des modules de modulation en largeur d'impulsion programmabes 32,33,34 du périphérique PWM 27 au lieu de l'être par les circuits retardateurs programmables 29,30,31.

Les consignes de vitesse de la machine sont passées au dispositif de génération 5,9 de signaux de commande Sw1Sw2,Sw3 à partir d'un bus embarqué de type CAN 35 via l'interface dédiée 28.

L'implémentation du procédé selon l'invention sur un type particulier de microcontrôleur 5, en se limitant à la génération des trois signaux de commande Sw1,Sw2,Sw3 d'une machine triphasée 2, n'est donnée qu'à titre d'exemple.

L'homme de métier portera sans difficultés les algorithmes décrits sur d'autres composants programmables tels que des microprocesseurs associés à des mémoires, ou des FPGA (FPGA est l'acronyme anglais de « Field Programmable Gate Array » c'est-à-dire de « Réseau de Portes Programmables Prédiffusé ») pour un nombre quelconque de phases.

Comme il va de soi, l'invention ne se limite donc pas aux seuls modes d'exécution préférentiels décrits ci-dessus. Elle embrasse au contraire toutes les variantes possibles de réalisation dans la limite de l'objet des revendications ci-après.

**Revendications**

1. Procédé de génération de signaux de commande (SW1,Sw2,Sw3) d'une machine électrique tournante polyphasée (2) comportant des enroulements de phases (4) et des capteurs (1) de la position du rotor en nombre égal au nombre desdites phases, du type de ceux où lesdits signaux de commande (Sw1,Sw2,Sw3) pilotant l'alimentation de puissance (10) desdits enroulements (4) sont constitués par des signaux déphasés (So1,So2,So3) au moyen d'une unité de traitement (5) d'un angle de déphasage (φ) continûment variable par rapport à des signaux de synchronisation (Si1,Si2,Si3) produits par lesdits capteurs (1), ladite unité de traitement (5) comportant des entrées (8) recevant lesdits signaux de synchronisation (Si1,Si2,Si3) et des sorties (6,7) émettant lesdits signaux déphasés (So1,So2,So3), **caractérisé en ce que** lesdits signaux de synchronisation (Si1,Si2,Si3) sont des signaux binaires présentant des fronts de synchronisation (11-17) et **en ce que** les fronts montants et descendants desdits signaux déphasés (So1,So2,So3) sont générés après un délai de commutation de niveau (ΔT1) fonction au moins dudit angle de déphasage (φ) à partir d'au moins un front de référence choisi parmi lesdits fronts de synchronisation tel que ledit délai (ΔT1) est minimum.

2. Procédé de génération de signaux de commande (Sw1,Sw2,Sw3) d'une machine électrique tournante polyphasée (2) selon la revendication 1, **caractérisé en ce que** lesdits signaux de commande (Sw1,Sw2,Sw3) sont identiques auxdits signaux de synchronisation (Si1,Si2,Si3) dans des conditions de fonctionnement spécifiques, notamment quand la vitesse de rotation (Vr) de ladite machine (2) est inférieure à une première vitesse minimum (Vmin1), ou supérieure à une première vitesse maximum (Vmax1).

3. Procédé de génération de signaux de commande (Sw1,Sw2,Sw3) d'une machine électrique tournante polyphasée selon la revendication 2, **caractérisé en ce que** lesdites conditions de fonctionnement spécifiques comprennent le cas où ladite vitesse de rotation (Vr):

   - croît et reste inférieure à une seconde vitesse minimum (Vmin2) supérieure à ladite première vitesse minimum (Vmin1) ;
   - décroît et reste supérieure à une seconde vitesse maximum (Vmax2) inférieure à ladite première vitesse maximum (Vmin1), ladite seconde vitesse maximum (Vmax2) étant supérieure à ladite seconde vitesse minimum (Vmin2) .

4. Procédé de génération de signaux de commande (Swl,Sw2,Sw3) d'une machine électrique tournante polyphasée (2) selon l'une quelconque des revendications 2 ou 3 précédentes, **caractérisé en ce que** lesdites conditions de fonctionnement spécifiques comprennent le cas où ladite unité de traitement (5) est arrêtée.

5. Procédé de génération de signaux de commande (Sw1,Sw2,Sw3) d'une machine électrique tournante polyphasée (2) selon l'une quelconque des revendications 2 ou 3 précédentes, **caractérisé en ce que**, dans lesdites conditions de fonctionnement spécifiques, ladite unité de traitement (5) recopie les niveaux logiques desdites entrées (8) sur lesdites sorties (6,7).

6. Procédé de génération de signaux de commande (Sw1,Sw2,Sw3) d'une machine électrique tournante polyphasée (2) selon l'une quelconque des revendications 2 à 4 précédentes, **caractérisé en ce que**, dans lesdites conditions de fonctionnement spécifiques, ladite unité de traitement (5) commande la commutation desdits signaux de commande (Sw1,Sw2,Sw3) sur lesdites entrées (8).

7. Procédé de génération de signaux de commande (Sw1,Sw2,Sw3) d'une machine électrique tournante polyphasée (2) selon l'une quelconque des revendications 2 à 6 précédentes, **caractérisé en ce que** lesdits signaux de synchronisation (Sil,Si2,Si3) ayant un rapport cyclique égal à 0,5 et étant déphasés entre eux d'un angle de déphasage nominal (Φ) en degrés égal à 360° divisé par ledit nombre de phases, on mesure un intervalle de temps (ΔTpn) compris entre deux desdits fronts de synchronisation (11-17) successifs, l'un étant montant et l'autre descendant.

8. Procédé de génération de signaux de commande (Sw1,Sw2,Sw3) d'une machine électrique tournante polyphasée (2) selon la revendication 7, **caractérisé en ce qu'**une valeur interfront (VΔTpn) dudit intervalle de temps (ΔTpn) résulte d'un comptage au moyen d'un circuit retardateur programmable de mesure (TIMERM) associé auxdits signaux de synchronisation (Si1,Si2,Si3) ayant une fréquence d'incrémentation de mesure (FTIMERM) prédéterminée.

9. Procédé de génération de signaux de commande (Sw1,Sw2,Sw3) d'une machine électrique tournante polyphasée (2) selon la revendication 8, **caractérisé en ce que** la détermination desdites conditions de fonctionnement spécifiques comprend la comparaison de ladite valeur interfront (VΔTpn) à un groupe de valeurs interfront nominales.

10. Procédé de génération de signaux de commande (Sw1,Sw2,Sw3) d'une machine électrique tournante polyphasée (2) selon la revendication 8, **caractérisé en ce qu'**en dehors desdites conditions de fonctionnement spécifiques, ledit angle de déphasage (Φ) est une fonction de ladite vitesse de rotation (Vr).

**11.** Procédé de génération de signaux de commande (Swl,Sw2,Sw3) d'une machine électrique tournante polyphasée (2) selon la revendication 10, **caractérisé en ce que** chaque valeur (V△T1) dudit délai (△T1), en unité de temps égale à l'inverse de ladite fréquence d'incrémentation de mesure, est tabulée pour chaque valeur interfront (V△Tpn) dans une première table (19).

**12.** Procédé de génération de signaux de commande (Swl,Sw2,Sw3) d'une machine électrique tournante polyphasée (2) selon la revendication 11, **caractérisé en ce qu'**une valeur de décalage (φ') égale au complément à 180° dudit angle de déphasage (φ) est tabulée pour chaque valeur interfront (V△Tpn) dans une seconde table (21).

**13.** Procédé de génération de signaux de commande (Swl,Sw2,Sw3) d'une machine électrique tournante polyphasée (2) selon les revendications 11 et 12, **caractérisé en ce qu'**il comprend les étapes suivantes :

- on rend la fréquence d'incrémentation courante (FTIMER1) d'un circuit retardateur programmable courant (TIMER1) associé à un signal de synchronisation courant (Si1) égale à ladite fréquence d'incrémentation de mesure (FTIMERM) ;
- on associe une ligne de sortie courante audit circuit retardateur programmable courant (TIMER1) ;
- on identifie ledit front de référence à partir de ladite valeur de décalage (φ') lue dans ladite seconde table (21);
- on charge la valeur courante (V△T1) dudit délai (△T1) lue dans ladite première table (19) dans ledit circuit retardateur programmable courant (TIMER1) ;
- on configure ledit circuit retardateur programmable courant (TIMER1) de manière que ladite ligne de sortie courante effectue une première transition d'un niveau haut vers un niveau bas, ou bien une seconde transition d'un niveau bas vers un niveau haut, quand un compteur courant dudit retardateur programmable courant (TIMER1) atteint ladite valeur courante (V△T1) ;
- on génère ledit signal déphasé courant (Sol) au moyen de ladite ligne de sortie courante.

**14.** Procédé de génération de signaux de commande (Sw1,Sw2,Sw3) d'une machine électrique tournante polyphasée (2) selon les revendications 11 et 12, **caractérisé en ce qu'**il comprend les étapes suivantes :

- on rend la fréquence d'incrémentation courante (FTIMER1) d'un circuit retardateur programmable courant (TIMER1) associé audit signal de synchronisation courant (Si1) égale à ladite fréquence d'incrémentation de mesure (FTIMERM) ;
- on identifie ledit front de référence à partir de ladite valeur de décalage (φ') lue dans ladite seconde table (21);
- on charge la valeur courante (V△T1) dudit délai (△T1) lue dans ladite première table (19) dans ledit circuit retardateur programmable courant (TIMER1) ;
- on active une interruption courante associée audit circuit retardateur programmable courant (TIMER1) se produisant à chaque fois que ladite valeur courante (V△T1) est atteinte ;
- on rend la fréquence de comptage courante d'un compteur programmable courant d'un module de modulation de largeur d'impulsions programmable courant (PWM1) égale à ladite fréquence d'incrémentation de mesure (FTIMERM) divisée par le double dudit nombre de phases;
- on associe une ligne de sortie courante audit module de modulation de largeur d'impulsions programmable courant (PWM1);
- on charge un registre de période courant et un registre de rapport cyclique courant dudit module de modulation de largeur d'impulsions programmable courant (PWM1) respectivement avec ladite valeur interfront (V△Tpn) et avec la moitié de ladite valeur interfront (V△Tpn) ;
- on configure ledit module de modulation de largeur d'impulsions courant (PWM1) de façon que ladite ligne de sortie courante subisse une transition initiale d'un niveau haut à un niveau bas, puis une première transition d'un niveau bas à un niveau haut quand ledit compteur programmable courant atteint une valeur intermédiaire courante contenue dans registre de rapport cyclique courant, et enfin une seconde transition d'un niveau haut à un niveau bas quand ledit compteur programmable courant atteint une valeur finale courante contenue dans ledit registre de période courant à chaque déclenchement de ladite interruption courante;
- on génère ledit signal binaire déphasé courant (Sol) au moyen de ladite ligne de sortie courante.

**15.** Dispositif de génération (5,9) de signaux de commande (Sw1,Sw2,Sw3) d'une machine électrique tournante polyphasée (2) comportant des enroulements de phases (4) et des capteurs (1) de la position du rotor en nombre égal au nombre desdites phases, du type de ceux comprenant des lignes de commande destinées à piloter l'alimentation de puissance (10) desdits enroulements (4), et une unité de traitement (5) présentant des entrées (8) recevant des signaux de synchronisation (Si1,Si2,Si3) produits par lesdits capteurs (1), et des sorties (6,7) émettant des signaux déphasés (So1,So2,So3) par rapport auxdits signaux de synchronisation (Si1,Si2,Si3) **caractérisé en ce que** :

- lesdits signaux de synchronisation (Si1,Si2,Si3) reçus par les entrées (8) sont des signaux binaires présentant des fronts de synchronisation (11-17) et **en ce que** les fronts montants et descendants desdits signaux déphasés (So1,So2,So3) émis par les sorties (6, 7) sont générés après un délai de commutation de niveau ($\Delta$T1) fonction au moins d'un angle de déphasage ($\varphi$) à partir d'au moins un front de référence choisi parmi lesdits fronts de synchronisation tel que ledit délai ($\Delta$T1) est minimum, et **en ce que**

- le dispositif comprend en outre des circuits de commutation (9) commandés par un signal d'aiguillage (Ss) émis par ladite unité de traitement (5) et reliant lesdites lignes de commande soit auxdites entrées (8), soit auxdites sorties (6,7) en fonction de la vitesse de rotation (Vr) de ladite machine (2) et/ou de l'état de ladite unité de traitement (5).

**16.** Dispositif de génération (5,9) de signaux de commande (Sw1,Sw2,Sw3) d'une machine électrique tournante polyphasée (2) selon la revendication 15, **caractérisé en ce que** lesdits circuits de commutation (9) sont des portes analogiques.

**17.** Dispositif de génération (5,9) de signaux de commande (Sw1,Sw2,Sw3) d'une machine électrique tournante polyphasée (2) selon l'une quelconque des revendications 15 ou 16, **caractérisé en ce que** ladite unité de traitement (5) est constituée d'un microprocesseur ou d'un microcontrôleur comprenant :

- au moins une unité centrale (22);
- au moins une mémoire volatile (24) et/ou au moins une mémoire non-volatile (23);
- au moins un compteur programmable (18) mesurant ladite vitesse de rotation (Vr);
- des circuits retardateurs programmables (29,30,31) en nombre au moins égal audit nombre de phases ;
- au moins un port d'entrée (8) recevant des signaux de synchronisation (Si1,Si2,Si3) produits par lesdits capteurs (1);
- au moins un premier port de sortie (6) émettant des signaux déphasés (So1,So2,So3) par rapport auxdits signaux de synchronisation (Si1,Si2,Si3);
- au moins un second port de sortie (25) émettant ledit signal d'aiguillage (Ss).

**18.** Dispositif de génération (5,9) de signaux de commande (Sw1,Sw2,Sw3) d'une machine électrique tournante polyphasée (2) selon l'une quelconque des revendications 15 ou 16, **caractérisé en ce que** ladite unité de traitement (5) est constituée d'un microprocesseur ou d'un microcontrôleur comprenant :

- au moins une unité centrale (22);
- au moins une mémoire volatile (24) et/ou au moins une mémoire non-volatile (23)
- au moins un compteur programmable (18) mesurant ladite vitesse de rotation (Vr);
- des circuits retardateurs programmables (29,30,31) en nombre au moins égal audit nombre de phases ;
- des modules de modulation de largeur d'impulsions programmables (32,33,34) en nombre au moins égal audit nombre de phases ;
- au moins un port d'entrée (8) recevant des signaux de synchronisation (Si1,Si2,Si3) produits par lesdits capteurs (1) ;
- au moins un premier port de sortie (7) émettant des signaux déphasés (So1,So2,So3) par rapport auxdits signaux de synchronisation (Si1,Si2,Si3);
- au moins un second port de sortie (25) émettant ledit signal d'aiguillage (Ss)

**19.** Dispositif de génération (5,9) de signaux de commande (Sw1,Sw2,Sw3) d'une machine électrique tournante polyphasée selon l'une quelconque des revendications 17 ou 18, **caractérisé en ce que** ladite mémoire non-volatile (24) contient une première table (19) associant des décalages temporels (V$\Delta$T1) desdits signaux déphasés (So1,So2,So3) chargés dans lesdits circuits retardateurs programmables (29,30,31) à des valeurs (V$\Delta$Tpn) représentatives de ladite vitesse de rotation (Vr) produites par ledit compteur programmable (18).

**20.** Dispositif de génération (5,9) de signaux de commande (Sw1,Sw2,Sw3) d'une machine électrique tournante polyphasée (2) selon la revendication 19, **caractérisé en ce que** ladite mémoire non-volatile (24) contient une seconde table (21) associant le complément à 180° des déphasages ($\varphi$) desdits signaux déphasés (Sol, So2, So3) auxdites valeurs représentatives (V$\Delta$Tpn) de ladite vitesse de rotation (Vr) produites par ledit compteur programmable (18) .

**21.** Dispositif de génération (5,9) de signaux de commande (Sw1,Sw2,Sw3) d'une machine électrique tournante polyphasée (2) selon l'une quelconque des revendications 17 ou 18, **caractérisé en ce que** lesdites mémoires (23,24) contiennent un programme mettant en oeuvre le procédé selon l'une quelconque des revendications 1 à 14 précédentes.

22. Séquences d'instructions exécutables par le dispositif (5,9) selon l'une quelconque des revendications 15 à 21 mettant en oeuvre le procédé selon l'une quelconque des revendications 1 à 14.

**Patentansprüche**

1. Verfahren zur Erzeugung von Signalen zur Steuerung (Sw1, Sw2, Sw3) einer rotierenden elektrischen Mehrphasenmaschine (2), welche Phasenwicklungen (4) und Sensoren (1) für die Position des Rotors, deren Anzahl gleich der Anzahl der Phasen ist, aufweist, vom Typ derjenigen, bei denen die Steuersignale (Sw1, Sw2, Sw3), welche die Leistungsversorgung (10) der Wicklungen (4) steuern, aus Signalen (Sol, So2, So3) bestehen, die mittels einer Verarbeitungseinheit (5) um einen stetig veränderlichen Phasenverschiebungswinkel ($\varphi$) in Bezug auf von den Sensoren (1) erzeugte Synchronisationssignale (Sil, Si2, Si3) phasenverschoben wurden, wobei die Verarbeitungseinheit (5) Eingänge (8), welche die Synchronisationssignale (Sil, Si2, Si3) empfangen, und Ausgänge (6, 7), welche die phasenverschobenen Signale (Sol, So2, So3) ausgeben, aufweist, **dadurch gekennzeichnet, dass** die Synchronisationssignale (Sil, Si2, Si3) binäre Signale sind, welche Synchronisationsflanken (11-17) aufweisen, und dadurch, dass die steigenden und fallenden Flanken der phasenverschobenen Signale (Sol, So2, So3) nach einer Pegel-Umschaltverzögerung ($\Delta$T1), die wenigstens von dem Phasenverschiebungswinkel ($\varphi$) abhängig ist, aus wenigstens einer Referenzflanke erzeugt werden, die aus den Synchronisationsflanken so ausgewählt ist, dass die Verzögerung ($\Delta$T1) minimal ist.

2. Verfahren zur Erzeugung von Signalen zur Steuerung (Sw1, Sw2, Sw3) einer rotierenden elektrischen Mehrphasenmaschine (2) nach Anspruch 1, **dadurch gekennzeichnet, dass** die Signale zur Steuerung (Sw1, Sw2, Sw3) unter spezifischen Betriebsbedingungen mit den Synchronisationssignalen (Sil, Si2, Si3) identisch sind, insbesondere wenn die Drehzahl (Vr) der Maschine (2) niedriger als eine erste minimale Drehzahl (Vmin1) oder höher als eine erste maximale Drehzahl (Vmax1) ist.

3. Verfahren zur Erzeugung von Signalen zur Steuerung (Sw1, Sw2, Sw3) einer rotierenden elektrischen Mehrphasenmaschine nach Anspruch 2, **dadurch gekennzeichnet, dass** die spezifischen Betriebsbedingungen den Fall umfassen, in dem die Drehzahl (Vr):

   - zunimmt und niedriger als eine zweite minimale Drehzahl (Vmin2) bleibt, die höher als die erste minimale Drehzahl (Vmin1) ist;
   - abnimmt und größer als eine zweite maximale Drehzahl (Vmax2) bleibt, die niedriger als die erste maximale Drehzahl (Vmin1) ist, wobei die zweite maximale Drehzahl (Vmax2) höher als die zweite minimale Drehzahl (Vmin2) ist.

4. Verfahren zur Erzeugung von Signalen zur Steuerung (Sw1, Sw2, Sw3) einer rotierenden elektrischen Mehrphasenmaschine (2) nach einem der vorhergehenden Ansprüche 2 oder 3, **dadurch gekennzeichnet, dass** die spezifischen Betriebsbedingungen den Fall umfassen, in dem die Verarbeitungseinheit (5) ausgeschaltet ist.

5. Verfahren zur Erzeugung von Signalen zur Steuerung (Sw1, Sw2, Sw3) einer rotierenden elektrischen Mehrphasenmaschine (2) nach einem der vorhergehenden Ansprüche 2 oder 3, **dadurch gekennzeichnet, dass** unter den spezifischen Betriebsbedingungen die Verarbeitungseinheit (5) die logischen Pegel der Eingänge (8) auf die Ausgänge (6, 7) kopiert.

6. Verfahren zur Erzeugung von Signalen zur Steuerung (Sw1, Sw2, Sw3) einer rotierenden elektrischen Mehrphasenmaschine (2) nach einem der vorhergehenden Ansprüche 2 bis 4, **dadurch gekennzeichnet, dass** unter den spezifischen Betriebsbedingungen die Verarbeitungseinheit (5) die Umschaltung der Signale zur Steuerung (Sw1, Sw2, Sw3) auf die Eingänge (8) steuert.

7. Verfahren zur Erzeugung von Signalen zur Steuerung (Sw1, Sw2, Sw3) einer rotierenden elektrischen Mehrphasenmaschine (2) nach einem der vorhergehenden Ansprüche 2 bis 6, **dadurch gekennzeichnet, dass**, wenn die Synchronisationssignale (Sil, Si2, Si3) ein Tastverhältnis aufweisen, das gleich 0,5 ist, und zueinander um einen Nenn-Phasenverschiebungswinkel ($\Phi$) phasenverschoben sind, der in Grad gleich 360° dividiert durch die Anzahl der Phasen ist, ein Zeitintervall ($\Delta$Tpn) gemessen wird, das zwischen zwei der aufeinander folgenden Synchronisationsflanken (11-17) liegt, wobei die eine steigend und die andere fallend ist.

8. Verfahren zur Erzeugung von Signalen zur Steuerung (Sw1, Sw2, Sw3) einer rotierenden elektrischen Mehrphasenmaschine (2) nach Anspruch 7, **dadurch gekennzeichnet, dass** ein Zwischen-Flanken-Wert (inter-edge value) (V$\Delta$Tpn) des Zeitintervalls ($\Delta$Tpn) aus einer Zählung mittels einer den Synchronisationssignalen (Sil, Si2, Si3) zugeordneten programmierbaren Mess-Verzögerungsschaltung (TIMERM) resultiert, die eine vorbestimmte Mess-Inkrementierungsfrequenz (FTIMERM) aufweist.

9. Verfahren zur Erzeugung von Signalen zur Steuerung (Sw1, Sw2, Sw3) einer rotierenden elektrischen Mehrphasenmaschine (2) nach Anspruch 8, **dadurch gekennzeichnet, dass** die Bestimmung der spezifischen Betriebsbedingungen den Vergleich des Zwischen-Flanken-Wertes (V$\Delta$Tpn) mit einer Gruppe von Nenn-Zwischen-Flanken-Werten umfasst.

10. Verfahren zur Erzeugung von Signalen zur Steuerung (Sw1, Sw2, Sw3) einer rotierenden elektrischen Mehrphasenmaschine (2) nach Anspruch 8, **dadurch gekennzeichnet, dass** außerhalb der spezifischen Betriebsbedingungen der Phasenverschiebungswinkel ($\Phi$) eine Funktion der Drehzahl (Vr) ist.

11. Verfahren zur Erzeugung von Signalen zur Steuerung (Sw1, Sw2, Sw3) einer rotierenden elektrischen Mehrphasenmaschine (2) nach Anspruch 10, **dadurch gekennzeichnet, dass** jeder Wert (V$\Delta$T1) der Verzögerung ($\Delta$T1), in einer Zeiteinheit, die gleich dem reziproken Wert der Mess-Inkrementierungsfrequenz ist, für jeden Zwischen-Flanken-Wert (V$\Delta$Tpn) in einer ersten Tabelle (19) tabelliert ist.

12. Verfahren zur Erzeugung von Signalen zur Steuerung (Sw1, Sw2, Sw3) einer rotierenden elektrischen Mehrphasenmaschine (2) nach Anspruch 11, **dadurch gekennzeichnet, dass** ein Versatzwert ($\varphi$'), der gleich dem Komplement des Phasenverschiebungswinkels ($\varphi$) zu 180° ist, für jeden Zwischen-Flanken-Wert (V$\Delta$Tpn) in einer zweiten Tabelle (21) tabelliert ist.

13. Verfahren zur Erzeugung von Signalen zur Steuerung (Sw1, Sw2, Sw3) einer rotierenden elektrischen Mehrphasenmaschine (2) nach den Ansprüchen 11 und 12, **dadurch gekennzeichnet, dass** es die folgenden Schritte umfasst:

   - die aktuelle Inkrementierungsfrequenz (FTIMER1) einer aktuellen programmierbaren Verzögerungsschaltung (TIMER1), die einem aktuellen Synchronisationssignal (Si1) zugeordnet ist, wird gleich der Mess-Inkrementierungsfrequenz (FTIMERM) gemacht;
   - eine aktuelle Ausgangsleitung wird der aktuellen programmierbaren Verzögerungsschaltung (TIMER1) zugeordnet;
   - die Referenzflanke wird ausgehend von dem Versatzwert ($\varphi$') identifiziert, der in der zweiten Tabelle (21) abgelesen wird;
   - der in der ersten Tabelle (19) abgelesene aktuelle Wert (V$\Delta$T1) der Verzögerung ($\Delta$T1) wird in die aktuelle programmierbare Verzögerungsschaltung (TIMER1) geladen;
   - die aktuelle programmierbare Verzögerungsschaltung (TIMER1) wird derart konfiguriert, dass die aktuelle Ausgangsleitung einen ersten Übergang von einem Hochpegel zu einem niedrigen Pegel ausführt, oder auch einen zweiten Übergang von einem niedrigen Pegel zu einem Hochpegel, wenn ein aktueller Zähler der aktuellen programmierbaren Verzögerungsschaltung (TIMER1) den aktuellen Wert (V$\Delta$T1) erreicht;
   - das aktuelle phasenverschobene Signal (Sol) wird mittels der aktuellen Ausgangsleitung erzeugt.

14. Verfahren zur Erzeugung von Signalen zur Steuerung (Sw1, Sw2, Sw3) einer rotierenden elektrischen Mehrphasenmaschine (2) nach den Ansprüchen 11 und 12, **dadurch gekennzeichnet, dass** es die folgenden Schritte umfasst:

   - die aktuelle Inkrementierungsfrequenz (FTIMER1) einer aktuellen programmierbaren Verzögerungsschaltung (TIMER1), die dem aktuellen Synchronisationssignal (Si1) zugeordnet ist, wird gleich der Mess-Inkrementierungsfrequenz (FTIMERM) gemacht;
   - die Referenzflanke wird ausgehend von dem Versatzwert ($\varphi$') identifiziert, der in der zweiten Tabelle (21) abgelesen wird;
   - der in der ersten Tabelle (19) abgelesene aktuelle Wert (V$\Delta$T1) der Verzögerung ($\Delta$T1) wird in die aktuelle programmierbare Verzögerungsschaltung (TIMER1) geladen;
   - es wird eine der aktuellen programmierbaren Verzögerungsschaltung (TIMER1) zugeordnete aktuelle Unterbrechung aktiviert, die jedes Mal eintritt, wenn, der aktuelle Wert (V$\Delta$T1) erreicht wird;
   - die aktuelle Zählfrequenz eines aktuellen programmierbaren Zählers eines aktuellen programmierbaren Pulsweitenmodulations-Moduls (PWM1) wird gleich der durch das Doppelte der Anzahl der Phasen dividierten Mess-Inkrementierungsfrequenz (FTIMERM) gemacht;

- dem aktuellen programmierbaren Pulsweitenmodulations-Modul (PWM1) wird eine aktuelle Ausgangsleitung zugeordnet;

- ein aktuelles Periodenregister und ein aktuelles Tastverhältnisregister des aktuellen programmierbaren Pulsweitenmodulations-Moduls (PWM1) werden mit dem Zwischen-Flanken-Wert (V∆Tpn) bzw. mit der Hälfte des Zwischen-Flanken-Wertes (V∆Tpn) geladen;

- das aktuelle Pulsweitenmodulations-Modul (PWM1) wird derart konfiguriert, dass die aktuelle Ausgangsleitung einen Anfangsübergang von einem Hochpegel zu einem niedrigen Pegel erfährt, danach einen ersten Übergang von einem niedrigen Pegel zu einem Hochpegel, wenn der aktuelle programmierbare Zähler einen aktuellen Zwischenwert erreicht, der in dem aktuellen Tastverhältnisregister enthalten ist, und schließlich einen zweiten Übergang von einem Hochpegel zu einem niedrigen Pegel, wenn der aktuelle programmierbare Zähler einen aktuellen Endwert erreicht, der bei jeder Auslösung der aktuellen Unterbrechung in dem aktuellen Periodenregister enthalten ist;

- das aktuelle phasenverschobene binäre Signal (Sol) wird mittels der aktuellen Ausgangsleitung erzeugt.

**15.** Vorrichtung zur Erzeugung (5, 9) von Signalen zur Steuerung (Sw1, Sw2, Sw3) einer rotierenden elektrischen Mehrphasenmaschine (2), welche Phasenwicklungen (4) und Sensoren (1) für die Position des Rotors, deren Anzahl gleich der Anzahl der Phasen ist, aufweist, vom Typ derjenigen, welche Steuerungsleitungen umfassen, die dazu bestimmt sind, die Leistungsversorgung (10) der Wicklungen (4) zu steuern, und eine Verarbeitungseinheit (5), die Eingänge (8), welche von den Sensoren (1) erzeugte Synchronisationssignale (Sil, Si2, Si3) empfangen, und Ausgänge (6, 7), welche in Bezug auf die Synchronisationssignale (Sil, Si2, Si3) phasenverschobene Signale (Sol, So2, So3) ausgeben, aufweist, **dadurch gekennzeichnet, dass**:

- die Synchronisationssignale (Sil, Si2, Si3), die durch die Eingänge (8) empfangen werden, binäre Signale sind, welche Synchronisationsflanken (11-17) aufweisen, und dadurch, dass die steigenden und fallenden Flanken der phasenverschobenen Signale (Sol, So2, So3), die von den Ausgängen (6, 7) ausgegeben werden, nach einer Pegel-Umschaltverzögerung (∆T1), die wenigstens von dem Phasenverschiebungswinkel (φ) abhängig ist, aus wenigstens einer Referenzflanke erzeugt werden, die aus den Synchronisationsflanken so ausgewählt ist, dass die Verzögerung (∆T1) minimal ist, und dadurch, dass
- die Vorrichtung außerdem Umschaltschaltungen (9) umfasst, die von einem von der Verarbeitungseinheit (5) gesendeten Weichensignal (Ss) gesteuert werden und die Steuerungsleitungen, in Abhängigkeit von der Drehzahl (Vr) der Maschine (2) und/oder dem Zustand der Verarbeitungseinheit (5), entweder mit den Eingängen (8) oder mit den Ausgängen (6, 7) verbinden.

**16.** Vorrichtung zur Erzeugung (5, 9) von Signalen zur Steuerung (Sw1, Sw2, Sw3) einer rotierenden elektrischen Mehrphasenmaschine (2) nach Anspruch 15, **dadurch gekennzeichnet, dass** die Umschaltschaltungen (9) Analoggatter sind.

**17.** Vorrichtung zur Erzeugung (5, 9) von Signalen zur Steuerung (Sw1, Sw2, Sw3) einer rotierenden elektrischen Mehrphasenmaschine (2) nach einem der Ansprüche 15 oder 16, **dadurch gekennzeichnet, dass** die Verarbeitungseinheit (5) aus einem Mikroprozessor oder einem Mikrocontroller besteht, welcher umfasst:

- wenigstens eine Zentraleinheit (22);
- wenigstens einen flüchtigen Speicher (24) und/oder wenigstens einen nichtflüchtigen Speicher (23);
- wenigstens einen programmierbaren Zähler (18), der die Drehzahl (Vr) misst;
- programmierbare Verzögerungsschaltungen (29, 30, 31), deren Anzahl wenigstens gleich der Anzahl der Phasen ist;
- wenigstens einen Eingangsanschluss (8), der von den Sensoren (1) erzeugte Synchronisationssignale (Sil, Si2, Si3) empfängt;
- wenigstens einen ersten Ausgangsanschluss (6), der in Bezug auf die Synchronisationssignale (Sil, Si2, Si3) phasenverschobene Signale (Sol, So2, So3) ausgibt;
- wenigstens einen zweiten Ausgangsanschluss (25), der das Weichensignal (Ss) ausgibt.

**18.** Vorrichtung zur Erzeugung (5, 9) von Signalen zur Steuerung (Sw1, Sw2, Sw3) einer rotierenden elektrischen Mehrphasenmaschine (2) nach einem der Ansprüche 15 oder 16, **dadurch gekennzeichnet, dass** die Verarbeitungseinheit (5) aus einem Mikroprozessor oder einem Mikrocontroller besteht, welcher umfasst:

- wenigstens eine Zentraleinheit (22);
- wenigstens einen flüchtigen Speicher (24) und/oder wenigstens einen nichtflüchtigen Speicher (23);
- wenigstens einen programmierbaren Zähler (18), der die Drehzahl (Vr) misst;
- programmierbare Verzögerungsschaltungen (29, 30, 31), deren Anzahl wenigstens gleich der Anzahl der Phasen ist;
- programmierbare Pulsweitenmodulations-Module (32, 33, 34), deren Anzahl wenigstens gleich der Anzahl der Phasen ist;
- wenigstens einen Eingangsanschluss (8), der von den Sensoren (1) erzeugte Synchronisationssignale (Sil, Si2, Si3) empfängt;
- wenigstens einen ersten Ausgangsanschluss (7), der in Bezug auf die Synchronisationssignale (Sil, Si2, Si3) phasenverschobene Signale (Sol, So2, So3) ausgibt;
- wenigstens einen zweiten Ausgangsanschluss (25), der das Weichensignal (Ss) ausgibt.

19. Vorrichtung zur Erzeugung (5, 9) von Signalen zur Steuerung (Sw1, Sw2, Sw3) einer rotierenden elektrischen Mehrphasenmaschine nach einem der Ansprüche 17 oder 18, **dadurch gekennzeichnet, dass** der nichtflüchtige Speicher (24) eine erste Tabelle (19) enthält, welche Zeitverschiebungen (V$\Delta$T1) der phasenverschobenen Signale (Sol, So2, So3), die in die programmierbaren Verzögerungsschaltungen (29, 30, 31) geladen sind, für die Drehzahl (Vr) repräsentativen Werten (V$\Delta$Tpn) zuordnet, die von dem programmierbaren Zähler (18) erzeugt werden.

20. Vorrichtung zur Erzeugung (5, 9) von Signalen zur Steuerung (Sw1, Sw2, Sw3) einer rotierenden elektrischen Mehrphasenmaschine (2) nach Anspruch 19, **dadurch gekennzeichnet, dass** der nichtflüchtige Speicher (24) eine zweite Tabelle (21) enthält, welche das Komplement der Phasenverschiebungen ($\varphi$) der phasenverschobenen Signale (Sol, So2, So3) zu 180° den für die Drehzahl (Vr) repräsentativen Werten (V$\Delta$Tpn) zuordnet, die von dem programmierbaren Zähler (18) erzeugt werden.

21. Vorrichtung zur Erzeugung (5, 9) von Signalen zur Steuerung (Sw1, Sw2, Sw3) einer rotierenden elektrischen Mehrphasenmaschine (2) nach einem der Ansprüche 17 oder 18, **dadurch gekennzeichnet, dass** die Speicher (23, 24) ein Programm enthalten, welches das Verfahren nach einem der vorhergehenden Ansprüche 1 bis 14 durchführt.

22. Befehlssequenzen, die von der Vorrichtung (5, 9) nach einem der Ansprüche 15 bis 21 ausführbar sind und das Verfahren nach einem der Ansprüche 1 bis 14 durchführen.

## Claims

1. Method for generating signals (Sw1,Sw2,Sw3) for controlling a polyphase rotating electrical machine (2) including phase windings (4) and sensors (1) for sensing the position of the rotor, in a number equal to the number of said phases, of the type in which said control signals (Sw1,Sw2,Sw3) controlling the supply of power (10) to said windings (4) are formed by signals (So1,So2,So3) that are phase-offset by way of a processing unit (5) by a phase-offset angle ($\varphi$) that is continuously variable with respect to synchronization signals (Si1,Si2,Si3) that are produced by said sensors (1), said processing unit (5) including inputs (8) receiving said synchronization signals (Si1,Si2,Si3) and outputs (6,7) emitting said phase-offset signals (So1,So2,So3), **characterized in that** said synchronization signals (Si1,Si2,Si3) are binary signals having synchronization edges (11-17) and **in that** the rising and falling edges of said phase-offset signals (So1,So2,So3) are generated after a level switching period ($\Delta$T1) dependent on at least one phase-offset angle ($\varphi$) starting from at least one reference edge chosen from among said synchronization edges such that said period ($\Delta$T1) is minimal.

2. Method for generating signals (Sw1,Sw2,Sw3) for controlling a polyphase rotating electrical machine (2) according to Claim 1, **characterized in that** said control signals (Sw1,Sw2,Sw3) are identical to said synchronization signals (Si1,Si2,Si3) under specific operating conditions, in particular when the rotational speed (Vr) of said machine (2) is lower than a first minimum speed (Vmin1), or higher than a first maximum speed (Vmax1).

3. Method for generating signals (Sw1,Sw2,Sw3) for controlling a polyphase rotating electrical machine according to Claim 2, **characterized in that** said specific operating conditions comprise the case where said rotational speed (Vr):

- increases and stays lower than a second minimum speed (Vmin2) higher than said first minimum speed (Vmin1) ;

- decreases and stays higher than a second maximum speed (Vmax2) lower than said first maximum speed (Vmin1), said second maximum speed (Vmax2) being higher than said second minimum speed (Vmin2).

4. Method for generating signals (Sw1,Sw2,Sw3) for controlling a polyphase rotating electrical machine (2) according to either one of preceding Claims 2 and 3, **characterized in that** said specific operating conditions comprise the case where said processing unit (5) is stopped.

5. Method for generating signals (Sw1,Sw2,Sw3) for controlling a polyphase rotating electrical machine (2) according to either one of preceding Claims 2 and 3, **characterized in that**, under said specific operating conditions, said processing unit (5) copies the logic levels of said inputs (8) to said outputs (6,7).

6. Method for generating signals (Sw1,Sw2,Sw3) for controlling a polyphase rotating electrical machine (2) according to any one of preceding Claims 2 to 4, **characterized in that**, under said specific operating conditions, said processing unit (5) commands the switching of said control signals (Sw1,Sw2,Sw3) on said inputs (8).

7. Method for generating signals (Sw1,Sw2,Sw3) for controlling a polyphase rotating electrical machine (2) according to any one of preceding Claims 2 to 6, **characterized in that**, with said synchronization signals (Si1,Si2,Si3) having a duty cycle equal to 0.5 and being phase-offset with respect to one another by a nominal phase-offset angle ($\Phi$) in degrees that is equal to 360° divided by said number of phases, a time interval ($\Delta$Tpn) between two of said consecutive synchronization edges (11-17), one being rising and the other falling, is measured.

8. Method for generating signals (Sw1,Sw2,Sw3) for controlling a polyphase rotating electrical machine (2) according to Claim 7, **characterized in that** an inter-edge value (V$\Delta$Tpn) of said time interval ($\Delta$Tpn) is derived by counting by way of a programmable measurement delay circuit (TIMERM) associated with said synchronization signals (Si1,Si2,Si3) and having a predetermined measurement incrementation frequency (FTIMERM).

9. Method for generating signals (Sw1,Sw2,Sw3) for controlling a polyphase rotating electrical machine (2) according to Claim 8, **characterized in that** the determination of said specific operating conditions comprises comparing said inter-edge value (V$\Delta$Tpn) with a group of nominal inter-edge values.

10. Method for generating signals (Sw1,Sw2,Sw3) for controlling a polyphase rotating electrical machine (2) according to Claim 8, **characterized in that**, outside of said specific operating conditions, said phase-offset angle ($\Phi$) is a function of said rotational speed (Vr).

11. Method for generating signals (Sw1,Sw2,Sw3) for controlling a polyphase rotating electrical machine (2) according to Claim 10, **characterized in that** each value (V$\Delta$T1) of said period ($\Delta$T1), in a unit of time equal to the reciprocal of said measurement incrementation frequency, is tabulated for each inter-edge value (V$\Delta$Tpn) in a first table (19).

12. Method for generating signals (Sw1,Sw2,Sw3) for controlling a polyphase rotating electrical machine (2) according to Claim 11, **characterized in that** an offset value ($\varphi$'), equal to the complement at 180° of said phase-offset angle ($\varphi$), is tabulated for each inter-edge value (V$\Delta$Tpn) in a second table (21).

13. Method for generating signals (Sw1,Sw2,Sw3) for controlling a polyphase rotating electrical machine (2) according to Claims 11 and 12, **characterized in that** it comprises the following steps:

- the current incrementation frequency (FTIMER1) of a current programmable delay circuit (TIMER1) associated with a current synchronization signal (Si1) is made equal to said measurement incrementation frequency (FTIMERM);
- a current output line is associated with said current programmable delay circuit (TIMER1);
- said reference edge is identified on the basis of said offset value ($\varphi$') read from said second table (21) ;
- the current value (V$\Delta$T1) of said period ($\Delta$T1), read from said first table (19), is loaded into said current programmable delay circuit (TIMER1);
- said current programmable delay circuit (TIMER1) is configured such that said current output line performs a first transition from a high level to a low level, or else a second transition from a low level to a high level, when a current counter of said current programmable delay (TIMER1) reaches said current value (V$\Delta$T1);
- said current phase-offset signal (Sol) is generated by way of said current output line.

14. Method for generating signals (Sw1,Sw2,Sw3) for controlling a polyphase rotating electrical machine (2) according to Claims 11 and 12, **characterized in that** it comprises the following steps:

- the current incrementation frequency (FTIMER1) of a current programmable delay circuit (TIMER1) associated with said current synchronization signal (Si1) is made equal to said measurement incrementation frequency (FTIMERM);
- said reference edge is identified on the basis of said offset value ($\varphi$') read from said second table (21) ;
- the current value (V$\Delta$T1) of said period ($\Delta$T1), read from said first table (19), is loaded into said current programmable delay circuit (TIMER1);
- a current interruption, associated with said current programmable delay circuit (TIMER1), occurring each time said current value (V$\Delta$T1) is reached, is activated;
- the current counting frequency of a current programmable counter of a current programmable pulse-width modulation module (PWM1) is made equal to said measurement incrementation frequency (FTIMERM) divided by twice said number of phases;
- a current output line is associated with said current programmable pulse-width modulation module (PWM1) ;
- a current period register and a current duty cycle register of said current programmable pulse-width modulation module (PWM1) are loaded with said inter-edge value (V$\Delta$Tpn) and with half of said inter-edge value (V$\Delta$Tpn), respectively;
- said current pulse-width modulation module (PWM1) is configured such that said current output line undergoes an initial transition from a high level to a low level, and then a first transition from a low level to a high level when said current programmable counter reaches a current intermediate value contained in a current duty cycle register, and lastly a second transition from a high level to a low level when said current programmable counter reaches a current final value contained in said current period register upon each triggering of said current interruption;
- said current phase-offset binary signal (Sol) is generated by way of said current output line.

15. Device (5,9) for generating signals (Sw1,Sw2,Sw3) for controlling a polyphase rotating electrical machine (2) including phase windings (4) and sensors (1) for sensing the position of the rotor, in a number equal to the number of said phases, of the type comprising control lines intended to control the supply of power (10) to said windings (4), and a processing unit (5) having inputs (8) receiving synchronization signals (Si1,Si2,Si3) produced by said sensors (1), and outputs (6,7) emitting signals (So1,So2,So3) that are phase-offset with respect to said synchronization signals (Si1,Si2,Si3), **characterized in that**:

- said synchronization signals (Si1,Si2,Si3) received by the inputs (8) are binary signals having synchronization edges (11-17) and **in that** the rising and falling edges of said phase-offset signals (So1,So2,So3) emitted by the outputs (6,7) are generated after a level switching period ($\Delta$T1) dependent on at least one phase-offset angle ($\varphi$) starting from at least one reference edge chosen from among said synchronization edges such that said period ($\Delta$T1) is minimal, and **in that**
- the device furthermore comprises switching circuits (9) commanded by a routing signal (Ss) emitted by said processing unit (5) and linking said control lines either to said inputs (8) or to said outputs (6,7) depending on the rotational speed (Vr) of said machine (2) and/or on the state of said processing unit (5).

16. Device (5,9) for generating signals (Sw1,Sw2,Sw3) for controlling a polyphase rotating electrical machine (2) according to Claim 15, **characterized in that** said switching circuits (9) are analogue gates.

17. Device (5,9) for generating signals (Sw1,Sw2,Sw3) for controlling a polyphase rotating electrical machine (2) according to either one of Claims 15 and 16, **characterized in that** said processing unit (5) is formed of a microprocessor or of a microcontroller comprising:

- at least one central unit (22);
- at least one volatile memory (24) and/or at least one non-volatile memory (23);
- at least one programmable counter (18) measuring said rotational speed (Vr);
- programmable delay circuits (29,30,31) in a number at least equal to said number of phases;
- at least one input port (8) receiving synchronization signals (Si1,Si2,Si3) produced by said sensors (1);
- at least one first output port (6) emitting signals (So1,So2,So3) that are phase-offset with respect to said synchronization signals (Si1, Si2, Si3);
- at least one second output port (25) emitting said routing signal (Ss).

18. Device (5,9) for generating signals (Sw1,Sw2,Sw3) for controlling a polyphase rotating electrical machine (2) according to either one of Claims 15 and 16, **characterized in that** said processing unit (5) is formed of a microprocessor or of a microcontroller comprising:

- at least one central unit (22);
- at least one volatile memory (24) and/or at least one non-volatile memory (23);
- at least one programmable counter (18) measuring said rotational speed (Vr);
- programmable delay circuits (29,30,31) in a number at least equal to said number of phases;
- programmable pulse-width modulation modules (32,33,34) in a number at least equal to said number of phases;
- at least one input port (8) receiving synchronization signals (Si1,Si2,Si3) produced by said sensors (1);
- at least one first output port (7) emitting signals (So1,So2,So3) that are phase-offset with respect to said synchronization signals (Si1, Si2, Si3);
- at least one second output port (25) emitting said routing signal (Ss).

19. Device (5,9) for generating signals (Sw1,Sw2,Sw3) for controlling a polyphase rotating electrical machine according to either one of Claims 17 and 18, **characterized in that** said non-volatile memory (24) contains a first table (19) associating temporal offsets (V$\Delta$T1) of said phase-offset signals (So1,So2,So3) that are loaded into said programmable delay circuits (29,30,31) with values (V$\Delta$Tpn) representative of said rotational speed (Vr) and produced by said programmable counter (18).

20. Device (5,9) for generating signals (Sw1,Sw2,Sw3) for controlling a polyphase rotating electrical machine (2) according to Claim 19, **characterized in that** said non-volatile memory (24) contains a second table (21) associating the complement at 180° of the phase offsets ($\varphi$) of said phase-offset signals (So1,So2,So3) with said values (V$\Delta$Tpn) representative of said rotational speed (Vr) and produced by said programmable counter (18) .

21. Device (5,9) for generating signals (Sw1,Sw2,Sw3) for controlling a polyphase rotating electrical machine (2) according to either one of Claims 17 and 18, **characterized in that** said memories (23,24) contain a program implementing the method according to any one of preceding Claims 1 to 14.

22. Sequences of instructions able to be executed by the device (5, 9) according to any one of Claims 15 to 21 implementing the method according to any one of Claims 1 to 14.

FIG. 1

**FIG. 2**

**FIG. 3**

FIG. 4

**FIG. 5**

**FIG. 6**

FIG. 7

FIG. 8

FIG. 9

FIG. 10

EP 2 022 164 B1

FIG. 11

**RÉFÉRENCES CITÉES DANS LA DESCRIPTION**

**Documents brevets cités dans la description**

- FR 2854746